# EUROPEAN PATENT SPECIFICATION

(11) **EP 1 759 884 B1**
(45) Date of publication and mention of the grant of the patent: **16.09.2009**
(21) Application number: 06116933.0
(22) Date of filing: 11.07.2006
(51) Int. Cl.: B60B 27/02

(54) **Bicycle hub with an integrated brake friction surface and antilock support member**
Nabe für Fahrrad mit integrierter Bremsenreibungsoberfläche und Antiblockierunterstützungselement
Moyeu de bicyclette avec une surface de friction de frein intégrée et un membre de support anti-blocage

(30) Priority: 31.08.2005 US 162204
(43) Date of publication of application: 07.03.2007
(73) Proprietor: SHIMANO INC., Osaka 590-8577 (JP)
(72) Inventor: Matsueda, Keiji, Sakai Osaka 590-8577 (JP); Tanaka, Keita, Sakai Osaka 590-8577 (JP)
(74) Representative: Intes, Didier Gérard André

(56) References cited:
- EP-A2- 0 562 288
- EP-A2- 1 122 094
- EP-A2- 1 391 325

## Description

### BACKGROUND OF THE INVENTION

The present invention is directed to bicycles and, more particularly, to a bicycle hub that uses a braking mechanism, according to the preamble of claim 1.

A typical bicycle hub generally includes a hub shaft that is detachably and non-rotatably mounted to the fork (frame) of the bicycle, a cylindrical hub shell (outer shell) that is mounted around the hub shaft, and bearings that rotatably support the hub shell to the hub shaft. Hub flanges are formed at opposite ends of the hub shell for mounting the hub shell to the spokes of the wheel. A braking mechanism apparatus that controls the rotation of the hub shell relative to the hub shaft may be mounted between the bicycle frame and the hub shell. For example, such a hub is disclosed by patent application EP 0562288. This application further discloses hubs in which the braking mechanism comprises a brake contact member which is either one with the brake force transmitting member (i.e., a single part), or is connected with the brake force transmitting member by a thread. In some bicycles, a brake force limiting mechanism that includes a friction clutch may be mounted inside the hub. The brake force limiting mechanism provides an antilock function for the hub by causing the friction clutch to slip when the braking mechanism applies a potentially excessive braking force.

A conventional brake force limiting mechanism comprises a brake force receiving member that engages a portion of the brake apparatus (e.g., a separate brake drum), and a friction engagement unit that creates a friction force in a brake force path between the brake force receiving member and the hub shell. The friction engagement unit comprises a plurality of first friction members and a plurality of second friction members, wherein the plurality of first friction members nonrotatably engage the brake force receiving member, the plurality of second friction members nonrotatably engage the hub shell, and the plurality of first friction member are interleaved with the plurality of second friction members. For example, a hub with such a brake force limiting mechanism is disclosed by the closest prior art EP 1391325. In this hub, the braking mechanism comprises a brake side member which is connected with the brake force transmitting member by a plurality of splines.

Conventionally, the brake force receiving member is spline-connected to the brake drum of the brake mechanism. As a result of manufacturing tolerances, there always is some play (looseness) between the brake drum and the brake force receiving member. Consequently, when the brakes are applied, there will be a hammering effect on the brake force receiving member from the brake drum as the play is taken up. This hammering effect may produce noise and/or a jolt to the rider that may cause the rider to think that the brake drum has broken or that the brake has otherwise malfunctioned, such as by limiting the braking force when in fact no such limiting has occurred.

### SUMMARY OF THE INVENTION

The present invention is directed to various features of a braking apparatus for a bicycle. In one embodiment, a bicycle hub comprises a hub shaft structured to be mounted to a bicycle frame, a hub shell rotatably supported relative to the hub shaft, a brake force receiving member rotatably supported relative to the hub shaft, a brake force limiting mechanism housed by the hub shell, and a brake contact member. The brake contact member includes a brake friction surface dimensioned to frictionally contact a brake force applying member. The brake force limiting mechanism communicates a brake force from the brake force receiving member to the hub shell and limits a maximum braking force communicated from the brake force receiving member to the hub shell. The brake contact member is securely mounted to the brake force receiving member without play. Additional inventive features will become apparent from the description below, and such features alone or in combination with the above features may form the basis of further inventions as recited in the claims and their equivalents.

### BRIEF DESCRIPTION OF THE DRAWINGS

Fig. 1 is a side view of a bicycle that includes a brake force control mechanism;

Fig. 2 is a partial cross-sectional view of a wheel hub that includes the brake force control mechanism;

Fig. 3 is a more detailed cross-sectional view of the brake force control mechanism;

Fig. 4 is an exploded view of the brake force control mechanism; and

Fig. 5 is a partial cross-sectional view of a wheel hub that includes another embodiment of a brake force control mechanism.

### DETAILED DESCRIPTION OF THE EMBODIMENTS

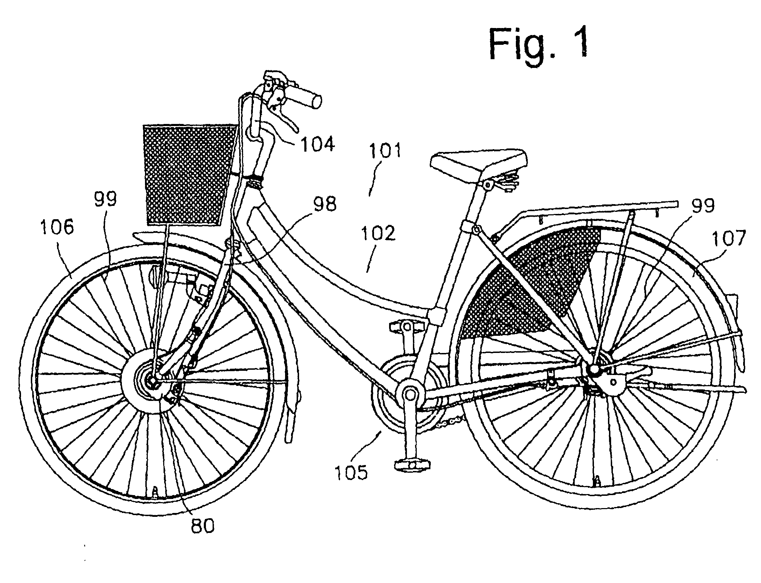

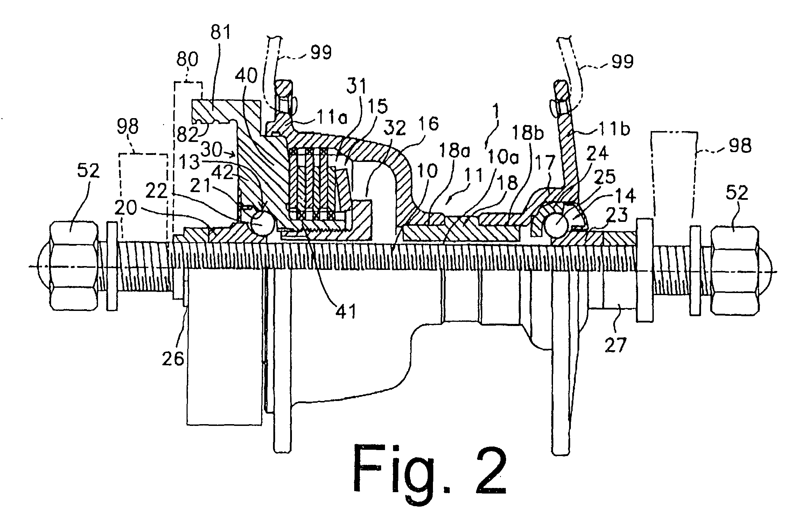

Fig. 1 is a side view of a bicycle 101 that includes a particular embodiment of a brake force control mechanism. Bicycle 101 comprises a frame 102 that includes a front fork 98, a handlebar 104 fixed to the front fork 98, a drive unit 105 comprising a chain and pedals, and front and rear wheels 106 and 107 with spokes 99. As shown in Fig. 2, a front hub 1 includes a hub shaft 10, a hub shell 11 that is placed around hub shaft 10, and first and second bearings 13 and 14 that are disposed between hub shaft 10 and hub shell 11 at opposite ends of hub shell 11. A male threaded portion 10a is formed on the outer surface of hub shaft 10, and hub shaft 10 is secured to the ends of front fork 98 using nuts 52. A brake force limiting mechanism 15 is disposed on one side of hub shell 11 (the left side in Fig. 2). When a roller brake mechanism 80 is mounted to front hub 1, part of an excessive braking force input from roller brake mechanism 80 can be eliminated by brake force limiting mechanism 15.

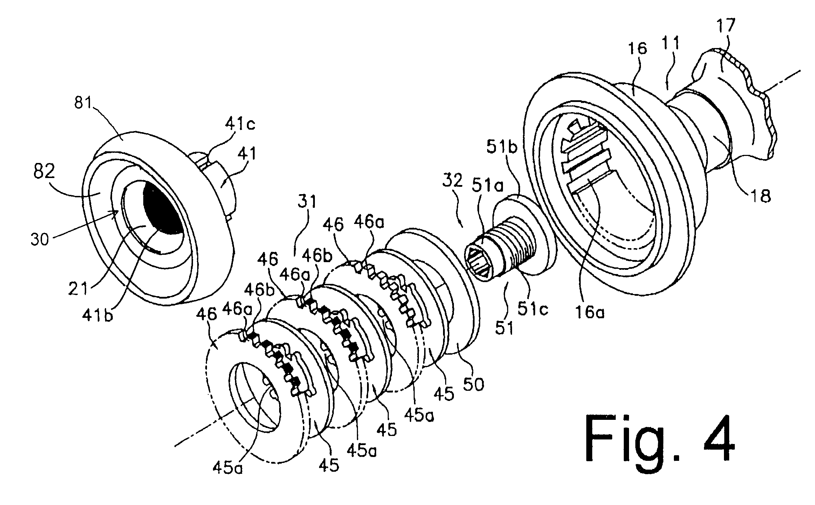

Hub shell 11 has a left hub shell 16 on which a first hub flange 11a is formed, a right hub shell 17 on which a second hub flange 11b is formed, and a cylindrical connecting member 18 that connects the two hub shells 16 and 17. Left hub shell 16 may be formed from forged aluminum alloy, for example, and it curves inward significantly relative to the end on which first hub flange 11a is formed so that it has a smaller diameter at the other end. A plurality of splines 16a (Fig. 4) are circumferentially disposed around the inner peripheral surface of left hub shell 16. The right hub shell 17 may be formed by press-molding an aluminum alloy plate, for example. The connecting member 18 has steps 18a and 18b to which the hub shells 16 and 17 are press-fit.

First bearing 13 comprises a first cone 20 that screws onto the hub shaft 10, a first cup 21 formed in the brake force limiting mechanism 15, and a plurality of balls 22 disposed between the first cone 20 and the first cup 21. Second bearing 14 comprises a second cone 23 that screws onto hub shaft 10, a second cup 24 that is press-fit into the curved portion of right hub shell 17, and a plurality of balls 25 that are disposed between second cone 23 and second cup 24. Cones 20 and 23 are rotationally and axially locked in place by lock nuts 26 and 27, respectively.

Brake force control mechanism 15 comprises a brake force receiving member 30, a friction engagement unit 31 that creates a friction force in a brake force transmission path between brake force receiving member 30 and hub shell 11, and a friction force adjustment unit 32 for adjusting the friction force created by friction engagement unit 31. As shown in Figs. 2-4, brake force receiving member 30 is integrally formed as one piece with a brake contact member in the form of a tubular brake drum 81 that has a brake friction surface 82. Such a construction eliminates the play inherent in conventional couplings between the brake drum and the brake force receiving member.

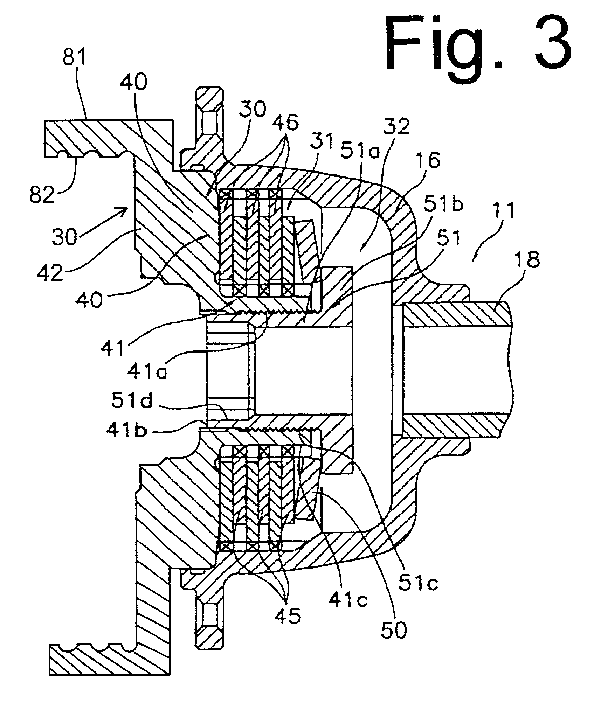

Brake force receiving member 30 comprises an annular connecting member 42 that extends radially inwardly from brake drum 81, a flange 40 rotatably mounted inside left hub shell 16, and a tubular support member 41 that extends axially inwardly from the inner peripheral surface of connecting member 42. The inner peripheral surface of connecting member 42 forms the first cup 21 of first bearing 13. Support member 41 has a female threaded portion 41a (Fig. 3) formed on the inner peripheral surface thereof, a caulking portion 41b comprising a knurled inner peripheral surface formed at the axially outer end, and a plurality of (e.g., three) equally spaced axially extending engagement grooves 41c formed around the outer peripheral surface thereof.

Friction engagement unit 31 is disposed around support member 41. Friction engagement unit 31 includes a plurality of (e.g., three) first friction discs 45 and a plurality of (e.g., three) second friction discs 46, wherein the plurality of first friction discs 45 are interleaved with the plurality of second friction discs 46. Each first friction disc 45 has protrusions 45a that are formed at three equally spaced locations on the inner peripheral surface thereof for nonrotatably engaging the engaging grooves 41c formed on the outer peripheral surface of support member 41. Each second friction disc 46 has a plurality of splines 46a formed on the outer peripheral surface thereof for nonrotatably engaging the plurality of splines 16a of left hub shell 16. In addition, patterned indented surfaces 46b, which provide a larger outer diameter to second friction discs 46 than the inner diameter of the opening of left hub shell 16, are formed on the outer peripheral surfaces of the plurality of splines 46a in two of the three second friction discs 46. Consequently, these two second friction discs 46 are press-fit into the inside of left hub shell 16, thus providing a firm coupling between brake force receiving member 30 and left hub shell 16. As a result, brake force receiving member 30, which also forms first cup 21 of bearing 13, does not rattle, and bearing 13 reliably supports hub shell 11.

Friction force adjustment unit 32 comprises a spring washer 50 and an adjustment member 51. Adjustment member 51 is a collared cylindrical member comprising a cylindrical part 51a and a flange 51b that is integrally formed with cylindrical part 51a. Cylindrical part 51a has a male threaded portion 51c and a rotation engagement portion 51d disposed on its inner peripheral surface. Male threaded portion 51c engages the female threaded portion 41a of support member 41. Rotation engagement portion 51d has a hexagonal cross-section so that a tool such as an Allen key may rotate adjustment member 51. Rotation of adjustment member 51 relative to brake force receiving member 30 causes flange 51b to increase or decrease the friction force created between friction discs 45 and 46 through spring washer 50 to set the maximum braking allowed force for roller brake mechanism 80, thereby controlling the braking force of roller brake mechanism 80.

To assemble front hub 1, friction discs 45 and 46 of brake force limiting mechanism 15 are first alternately mounted to brake force receiving member 30. After mounting spring washer 50, adjustment member 51 is screwed into support member 41 to create a desired amount of friction force between friction discs 45 and 46, and brake force limiting mechanism 15 is installed into hub shell 11. Then, the friction force of brake force limiting mechanism 15 is rechecked. If the friction force reading has changed from the desired value, an Allen key may be placed in rotation engagement portion 51d to rotate adjustment member 51 while brake force receiving member 30 is held stationary, thus adjusting the friction force created between friction discs 45 and 46. It is also acceptable if brake force receiving member 30 is turned after a jig is placed in rotation engagement portion 51d and adjustment member 51 is locked in place. After the desired friction force is obtained, the diameter of rotation engagement portion 51d may be enlarged radially outwardly toward caulking portion 41b for caulking purposes. This reduces the chance that the set friction force of brake force limiting mechanism 15 will change while it is housed in hub shell 11. Installing hub shaft 10 and bearings 13 and 14 completes the assembly of front hub 1.

Because the maximum braking force allowed by brake force limiting mechanism 15 can be adjusted with brake force limiting mechanism 15 housed within hub shell 11 in this embodiment, even if the maximum allowed braking force changes due to deformation of second friction discs 46 when they are pressed into hub shell 11 (or from some other reason), the original maximum allowed braking force can be restored very easily without removing brake force limiting mechanism 15 from hub shell 11.

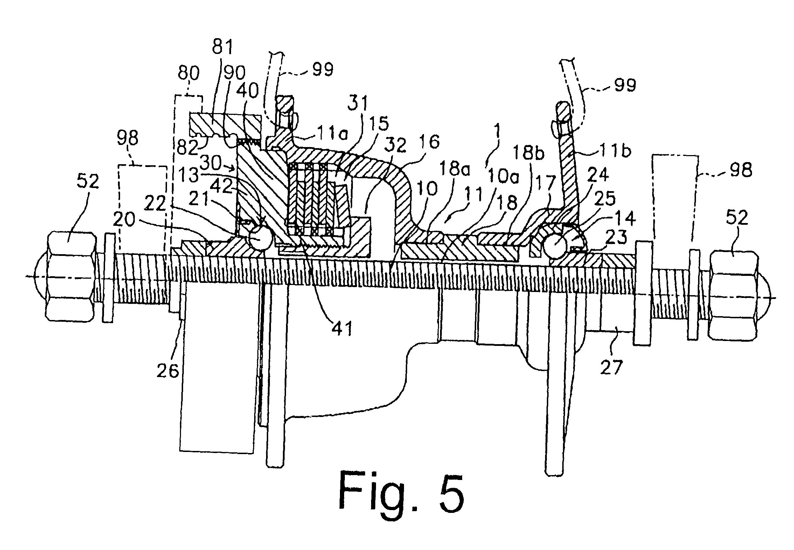

While the above is a description of various embodiments of inventive features, further modifications may be employed without departing from the spirit and scope of the present invention. For example, while brake drum 81 was formed as one piece with brake force receiving member 30, brake drum 81 may be press-fit onto brake force receiving member 30 as shown in Fig. 5. In this case, the outer peripheral surface of connecting member 42 may have knurls 90 to enhance the connection. Such a construction also eliminates the play inherent in conventional couplings between the brake drum and the brake force receiving member.

The described embodiments involved a front hub, but a brake force limiting mechanism may be applied to a rear hub that includes an internal gear hub. Only a brake force limiting mechanism was mounted in the front hub in the described embodiments, but a generator mechanism also may be included therein.

The size, shape, location or orientation of the various components may be changed as desired. Components that are shown directly connected or contacting each other may have intermediate structures disposed between them. The functions of one element may be performed by two, and vice versa. The structures and functions of one embodiment may be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the scope of the invention should not be limited by the specific structures disclosed or the apparent initial focus or emphasis on a particular structure or feature.

## Claims

1. A bicycle hub comprising:
a hub shaft (10) structured to be mounted to a bicycle frame (102);
a hub shell (16, 17) rotatably supported relative to the hub shaft;
a brake force receiving member (30) rotatably supported relative to the hub shaft;
a brake force limiting mechanism (15) housed by the hub shell, wherein the brake force limiting mechanism communicates a brake force from the brake force receiving member (30) to the hub shell (16, 17) and limits a maximum braking force communicated from the brake force receiving member to the hub shell; and
a brake contact member (81) including a brake friction surface (82) dimensioned to frictionally contact a brake force applying member (80), **characterized in that** the brake contact member (81) is press fit onto the brake force receiving member (30).

2. The bicycle hub according to claim 1, wherein the brake contact member is disposed radially outwardly from the brake force receiving member.

3. The bicycle hub according to claim 1 or 2, wherein the brake force receiving member (30) comprises:
a connecting member (42) extending radially inwardly from the brake contact member (81); and
a support member (41) extending laterally from the connecting member.

4. The bicycle hub according to any one of claims 1 to 3, wherein the brake force limiting mechanism (15) comprises a friction engagement unit (31) that creates a friction force in a brake force transmission path between the brake force receiving member (30) and the hub shell (16, 17).

5. The bicycle hub according to claim 4, wherein the friction engagement unit (31) comprises:
a plurality of first friction members (45) nonrotatably coupled relative to the brake force receiving member (30); and
a plurality of second friction members (46) nonrotatably coupled relative to the hub shell (16, 17);
wherein the plurality of first friction members are interleaved with the plurality of second friction members.

6. The bicycle hub according to claims 3 and 5, wherein the plurality of first friction members (45) are nonrotatably coupled to the support member (41) .

7. The bicycle hub according to claim 6, wherein the plurality of first friction members (45) extend radially outwardly from the support member (41).

8. The bicycle hub according to claim 3 and any one of claims 1 to 7, wherein the support member (41) comprises a tubular member.

9. The bicycle hub according to claim 8, wherein the plurality of first friction members (45) are axially movable relative to the support member (41).

10. The bicycle hub according to any one of claims 1 to 9, wherein the brake contact member (81) comprises a tubular member.

11. The bicycle hub according to claim 10 wherein the brake friction surface (82) is disposed on an inner peripheral surface of the brake contact member.

12. The bicycle hub according to claim 3 and any one of claims 3 to 11, wherein the connecting member (42) comprises an annular member.

13. The bicycle hub according to claim 3 and any one of claims 3 to 12, wherein the brake contact member (81) comprises a first tubular member (82), and wherein the support member (41) comprises a second tubular member.

## Patentansprüche

1. Fahrradnabe umfassend:
eine Nabenwelle (10), die ausgebildet ist, um an einem Fahrradrahmen (102) montiert zu werden,
eine Nabenhülle (16, 17), die relativ zur Nabenwelle drehbar gelagert ist,
ein Bremskraftempfangselement (30), das relativ zur Nabenhülle drehbar gelagert ist,
eine Bremskraftbegrenzungsvorrichtung (15), die in der Nabenhülle untergebracht ist, wobei die Bremskraftbegrenzungsvorrichtung eine Bremskraft von dem Bremskraftempfangselement (30) an die Nabenhülle (16, 17) überträgt und eine von dem Bremskraftempfangselement an die Nabenhülle übertragene maximale Bremskraft begrenzt, und
ein Bremskontaktelement (81) mit einer Bremsreibungsfläche (82), die so bemaßt ist, daß sie ein Bremskraftanwendeelement (80) reibschlüssig berührt,
**dadurch gekennzeichnet, daß** das Bremskontaktelement (81) auf dem Bremskraftempfangselement (30) eingepresst ist.

2. Fahrradnabe nach Anspruch 1, wobei das Bremskontaktelement radial auswärts des Bremskraftempfangselements angeordnet ist.

3. Fahrradnabe nach Anspruch 1 oder 2, wobei das Bremskraftempfangselement (30) umfaßt:
ein Verbindungselement (42), das sich von dem Bremskontaktelement (81) radial nach innen erstreckt, und
ein Tragelement (41), das sich von dem Verbindungselement seitlich erstreckt.

4. Fahrradnabe nach einem der Ansprüche 1 bis 3, wobei die Bremskraftbegrenzungsvorrichtung (15) eine Reibkrafteingriffseinheit (31) umfaßt, die eine Reibkraft in einem Bremskraftübertragungsweg zwischen dem Bremskraftempfangselement (30) und der Nabenhülle (16,17) erzeugt.

5. Fahrradnabe nach Anspruch 4, wobei die Reibkrafteingriffseinheit (31) umfaßt:
eine Mehrzahl von ersten Reibkraftelementen (45), die bezüglich des Bremskraftempfangselements (30) nicht drehbar verbunden sind, und
eine Mehrzahl von zweiten Reibkraftelementen (46), die bezüglich der Nabenhülle (16,17) nicht drehbar verbunden sind,
wobei die Mehrzahl von ersten Reibkraftelementen zwischen der Mehrzahl von zweiten Reibungskraftelementen angeordnet sind.

6. Fahrradnabe nach Ansprüchen 3 und 5, wobei die Mehrzahl von ersten Reibkraftelementen (45) mit dem Tragelement (41) nicht drehbar verbunden ist.

7. Fahrradnabe nach Anspruch 6, wobei die Mehrzahl von ersten Reibkraftelementen (45) sich radial auswärts von dem Tragelement (41) erstreckt.

8. Fahrradnabe nach Anspruch 3 und einem der Ansprüche 1 bis 7, wobei das Tragelement (41) ein rohrförmiges Element umfaßt.

9. Fahrradnabe nach Anspruch 8, wobei die Mehrzahl von ersten Reibkraftelementen (45) bezüglich des Tragelements (41) axial beweglich ist.

10. Fahrradnabe nach einem der Ansprüche 1 bis 9, wobei das Bremskontaktelement (81) ein rohrförmiges Element umfaßt.

11. Fahrradnabe nach Anspruch 10, wobei die Bremsreibungsfläche (82) auf einer inneren Umfangsfläche des Bremskontaktelements angeordnet ist.

12. Fahrradnabe nach Anspruch 3 und einem der Ansprüche 3 bis 11, wobei das Verbindungselement (42) ein ringförmiges Element umfaßt.

13. Fahrradnabe nach Anspruch 3 und einem der Ansprüche 3 bis 12, wobei das Bremskontaktelement (81) ein erstes rohrförmiges Element (82) umfaßt und wobei das Tragelement (41) ein zweites rohrförmiges Element umfaßt.

## Revendications

1. Moyeu de bicyclette comprenant :
un axe de moyeu (10) structuré pour être monté sur un cadre de bicyclette (102) ;
une coque de moyeu (16, 17) supportée à rotation par rapport à l'axe de moyeu ;
un élément de réception de force de freinage (30) supporté à rotation par rapport à l'axe de moyeu ;
un mécanisme de limitation de force de freinage (15) logé dans la coque de moyeu, dans lequel le mécanisme de limitation de force de freinage communique une force de freinage depuis l'élément de réception de force de freinage (30) à la coque de moyeu (16, 17) et limite une force de freinage maximum communiquée depuis l'élément de réception de force de freinage à la coque de moyeu ; et
un élément de contact de freinage (81) incluant une surface de frottement de freinage (82) dimensionnée pour entrer en contact par frottement avec un élément d'application de force de freinage (80), **caractérisé en ce que** l'élément de contact de freinage (81) est monté à force sur l'élément de réception de force de freinage (30).

2. Moyeu de bicyclette selon la revendication 1, dans lequel l'élément de contact de freinage est disposé radialement vers l'extérieur depuis l'élément de réception de force de freinage.

3. Moyeu de bicyclette selon la revendication 1 ou 2, dans lequel l'élément de réception de force de freinage (30) comprend :
un élément de connexion (42) s'étendant radialement vers l'intérieur depuis l'élément de contact de freinage (81) ; et
un élément de support (41) s'étendant latéralement depuis l'élément de connexion.

4. Moyeu de bicyclette selon l'une quelconque des revendications 1 à 3, dans lequel le mécanisme de limitation de force de freinage (15) comprend une unité d'engagement par frottement (31) qui crée une force de frottement dans un chemin de transmission de force de freinage entre l'élément de réception de force de freinage (30) et la coque de moyeu (16, 17).

5. Moyeu de bicyclette selon la revendication 4, dans lequel l'unité d'engagement par frottement (31) comprend :
une pluralité de premiers éléments de frottement (45) couplés de façon à ne pas tourner par rapport à l'élément de réception de force de freinage (30) ; et
une pluralité de seconds éléments de frottement (46) couplés de façon à ne pas tourner par rapport à la coque de moyeu (16, 17) ;
dans lequel la pluralité de premiers éléments de frottement sont intercalés avec la pluralité de seconds éléments de frottement.

6. Moyeu de bicyclette selon les revendications 3 et 5, dans lequel la pluralité de premiers éléments de frottement (45) sont couplés de façon à ne pas tourner avec l'élément de support (41).

7. Moyeu de bicyclette selon la revendication 6, dans lequel la pluralité de premiers éléments de frottement (45) s'étendent radialement vers l'extérieur depuis l'élément de support (41).

8. Moyeu de bicyclette selon la revendication 3 et selon l'une quelconque des revendications 1 à 7, dans lequel l'élément de support (41) comprend un élément tubulaire.

9. Moyeu de bicyclette selon la revendication 8, dans lequel la pluralité de premiers éléments de frottement (45) sont mobiles axialement par rapport à l'élément de support (41).

10. Moyeu de bicyclette selon l'une quelconque des revendications 1 à 9, dans lequel l'élément de contact de freinage (81) comprend un élément tubulaire.

11. Moyeu de bicyclette selon la revendication 10, dans lequel la surface de frottement de freinage (82) est disposée sur une surface périphérique intérieure de l'élément de contact de freinage.

12. Moyeu de bicyclette selon la revendication 3 et selon l'une quelconque des revendications 3 à 11, dans lequel l'élément de connexion (42) comprend un élément annulaire.

13. Moyeu de bicyclette selon la revendication 3 et selon l'une quelconque des revendications 3 à 12, dans lequel l'élément de contact de freinage (81) comprend un premier élément tubulaire (82), et dans lequel l'élément de support (41) comprend un second élément tubulaire.
